# EUROPÄISCHE PATENTSCHRIFT

(11) **EP 2 840 191 B1**
(45) Veröffentlichungstag und Bekanntmachung des Hinweises auf die Patenterteilung: **14.06.2017**
(21) Anmeldenummer: 13181202.6
(22) Anmeldetag: 21.08.2013
(51) Int. Cl.: E03C 1/298, F16K 15/14

(54) **Geruchsverschlussvorrichtung**
Odour trap device
Dispositif de siphon

(43) Veröffentlichungstag der Anmeldung: 25.02.2015
(73) Patentinhaber: Geberit International AG, 8645 Jona (CH)
(72) Erfinder: Kosarnig, Rolf, 8630 Rüti (CH)
(74) Vertreter: Frischknecht, Harry Ralph

(56) Entgegenhaltungen:
- WO-A1-2006/062392
- DE-U1-202007 019 422
- DE-U1-202010 009 936
- GB-A- 2 481 844

## Beschreibung

### TECHNISCHES GEBIET

Die vorliegende Erfindung betrifft eine Geruchsverschlussvorrichtung für Sanitärvorrichtungen, insbesondere für spülwasserlose Sanitärvorrichtungen, nach dem Oberbegriff von Anspruch 1. Die Sanitärvorrichtung ist beispielsweise ein Urinal.

### STAND DER TECHNIK

Aus dem Stand der Technik sind Geruchsverschlussvorrichtungen für wasserlose Sanitäranlagen bekannt. Beispielsweise zeigt die EP 1 447 485 eine derartige Geruchsverschlussvorrichtung mit einem Ventilelement in der Form eines Trichters, welcher in einen Schlauch mündet. Bei anstehender und abzuführender Flüssigkeit, wie beispielsweise Urin, öffnet sich das Ventilelement im Bereich des Schlauches. Für die Öffnung des Ventilelementes muss eine gewisse Wassersäule erreicht werden.

Aus der WO 92/14888 ist ebenfalls eine Geruchsverschlussvorrichtung bekannt geworden. Diese Geruchsverschlussvorrichtung weist ein kegelförmiges Dichtelement auf. Das kegelförmige Ventilelement steht im Bereich seines grössten Durchmessers mit einer Dichtkante an der Wandung des Ventilelementes an. Hierdurch wird ein Dichtbereich in der Form einer Dichtlinie bereitgestellt. Diese Art der Dichtung hat den Nachteil, dass die Dichtwirkung mit steigender Zahl von Betätigungen stark abnimmt. Zudem ist die Abflussleistung in Litern pro Sekunde sehr gering. Auch kann keine markante Zunahme der Abflussleistung bei steigender Stauhöhe festgestellt werden, was vor allem damit zusammenhängt, dass die Bewegung des Dichtelementes aufgrund seiner Ausbildung sehr beschränkt ist. Aber auch bei einem Gegendruck im Leitungssystem weist das Dichtelement den Nachteil auf, dass sich dieses öffnen kann. Die WO 2006/062392 zeigt ebenfalls eine Geruchsverschlussvorrichtung und stellt den nächstkommenden Stand der Technik dar.

### DARSTELLUNG DER ERFINDUNG

Ausgehend von diesem Stand der Technik ist es eine Aufgabe der vorliegenden Erfindung, eine Geruchsverschlussvorrichtung anzugeben, welche die Nachteile des Standes der Technik überwindet. Insbesondere soll die Geruchsverschlussvorrichtung eine verbesserte Dichtleistung bei einer verbesserten oder gleichbleibender Abflussleistung aufweisen. Bei einem Gegendruck im Abwassersystem soll ein weiteres Aufdrücken der Dichtmembran verhindert werden. Eine solche Aufgabe löst eine Geruchsverschlussvorrichtung nach Anspruch 1. Demgemäss umfasst die Geruchsverschlussvorrichtung für Sanitärvorrichtungen, wie beispielsweise Urinale, ein Abflusselement mit einer Dichtwandung, eine Dichtmembran, welche mit der Dichtwandung in einer Verschlussstellung dichtend in Kontakt ist und bei Anstehen von einer Flüssigkeit, wie Urin, von der Verschlussstellung in eine Öffnungsstellung von der Dichtwandung weg gedrückt wird, wodurch ein Spalt zwischen Dichtmembran und Dichtwandung gebildet wird, durch welchen die Flüssigkeit abführbar ist, und ein Lagerungselement zur Lagerung der Dichtmembran bezüglich der Dichtwandung. Die Dichtmembran steht mit dem Lagerungselement in Verbindung. Die Dichtmembran weist eine Dichtfläche auf, welche parallel zur Dichtwandung verläuft. Die besagte Dichtfläche der Dichtmembran in der Verschlussstellung liegt an der Dichtwandung des Abflusselementes im Wesentlichen flächig an oder die besagte Dichtfläche der Dichtmembran steht in der Verschlussstellung derart beabstandet zur Dichtwandung, so dass der zwischen der Dichtwandung und der Dichtfläche mindestens teilweise vorhandene Flüssigkeitsfilm eine Adhäsionskraft zwischen Dichtwandung und Dichtfläche bereitstellt.

Aufgrund des parallelen Verlaufes zwischen Dichtfläche und Dichtwandung wird eine flächige Dichtstelle zwischen der Dichtwandung und der Dichtmembran bereitgestellt. Diese flächige Dichtstelle wird einerseits durch ein direktes Anliegen der Dichtmembran im Bereich ihrer Dichtfläche oder andererseits durch den zwischen der Dichtwandung und der Dichtfläche vorliegenden Flüssigkeitsfilm erreicht. Der Flüssigkeitsfilm wird über die Kapillarwirkung zwischen Dichtwandung und Dichtfläche im Zwischenraum gehalten. Weiter weist die Dichtmembran in Abflussrichtung gesehen vor der Dichtfläche einen konisch oder tonnenförmig verlaufenden Stauabschnitt auf, wobei der Durchmesser des Stauabschnittes sich mit zunehmendem Abstand von der Dichtfläche verkleinert.

Weiter weist das Lagerungselement eine flächige Lagerplatte und sich von der Lagerplatte erstreckende Lagerstege auf, über welche Lagerstege die Lagerplatte vorzugsweise zentrisch im Abflusselement gelagert ist. Die Lagerstege bilden einen Durchgang zwischen Abflusselement und der Lagerplatte, so dass die Flüssigkeit durch diesen Durchgang das Ablusselement passieren kann.

Der Stauabschnitt der Dichtmembran ist an den Lagerstegen abgestützt.

Die Dichtmembran ist vorzugsweise elastisch und rückfedernd ausgebildet, so dass bei Anstehen von der Flüssigkeit die Dichtmembran mit der Dichtfläche von der Dichtwandung weg gedrückt wird. Hierdurch entsteht bei Vorhandensein der Flüssigkeit ein Spalt, durch welchen die Flüssigkeit die Dichtstelle zwischen Dichtfläche und Dichtwandung passieren kann. Sobald die Flüssigkeit die Dichtstelle passiert hat, nimmt die Dichtmembran wieder die Verschlussstellung ein. Das heisst, die Dichtfläche bewegt sich wieder in Richtung Dichtwandung, wodurch der Spalt aufgehoben wird.

Die Sanitärvorrichtung ist vorzugsweise eine spülwasserlose Sanitärvorrichtung, welche im Regelfall nicht mit Wasser gespült wird. Im Reinigungsfall kann die spülwasserlose Sanitärvorrichtung aber dennoch mit Wasser oder einem Reinigungsmittel gespült werden, wobei sich die Dichtmembran im Wesentlichen gleich wie bei der anstehenden Flüssigkeit verhält. Die Sanitärvorrichtung kann aber auch eine wassergespülte Sanitärvorrichtung sein, wobei sich die Dichtmembran dann ebenfalls im Wesentlichen gleich wie bei der anstehenden Flüssigkeit verhält.

Vorzugsweise sind die Dichtwandung und die Dichtfläche zylindrisch ausgebildet. Die Dichtwandung des Abflusselementes ist vorzugsweise die Innenseite eines zylindrischen Rohrs und die Dichtfläche der Dichtmembran ist vorzugsweise die Aussenseite der Dichtmembran, welche im Bereich der Dichtfläche zylindrisch ausgebildet ist. Die Dichtmembran liegt mindestens mit der Dichtfläche im Inneren des zylindrischen Rohrs. Die Dichtmembran erstreckt sich bevorzugt alleine oder in Kombination mit anderen Elementen über den gesamten Querschnitt des Abflusselementes. Insbesondere erstreckt sich die Dichtwandung vollständig über den Rohrquerschnitt.

Vorzugsweise sind die Dichtfläche und die Dichtwandung komplementär bzw. passend zueinander ausgebildet und weisen insbesondere im Wesentlichen den gleichen Durchmesser auf.

Besonders bevorzugt ist die Dichtmembran als Hohlzylinder ausgebildet, dessen Mantelfläche die Dichtfläche bereitstellt, wobei auf einer Stirnseite der Hohlzylinder mit einem Abschlussabschnitt ausgebildet ist, welcher den Hohlzylinder stirnseitig verschliesst. Der Abschlussabschnitt schliesst den Hohlraum des Hohlzylinders ab. Der Abschlussabschnitt kann entweder vollständig durch die Dichtmembran oder durch weitere Elemente, wie beispielsweise durch das Lagerungselement, bereitgestellt werden.

Vorzugsweise ist die Dichtfläche mit einem Durchmesser um eine Mittelachse umlaufend ausgebildet und weist in Richtung der Mittelachse gesehen eine Länge auf, welche grösser als 10% des besagten Durchmessers, bevorzugterweise grösser als 20% des besagten Durchmessers ist. Die Dichtfläche weist also in Richtung der Mittelachse eine Ausdehung auf, welche nicht linienförmig ist.

Die Dichtfläche kann auch als Mantelfläche bezeichnet werden.

Die Oberfläche der Dichtfläche sowie der Dichtwandung können verschiedenartig ausgebildet sein. In einer ersten Variante ist die Oberfläche der Dichtfläche und/oder der Dichtwandung flach bzw. plan oder eben ausgebildet. Das heisst, die Oberfläche weist im Wesentlichen keine Erhebungen oder Vertiefungen auf. In einer zweiten Variante ist die Oberfläche der Dichtfläche und/oder der Dichtwandung mindestens abschnittsweise mit einer Oberflächenstruktur, wie Rillen, Noppen, Rippen oder aufgeraute Oberfläche, versehen.

Die Dichtmembran umfasst vorzugsweise einen Abtropfabschnitt, der sich der Dichtfläche anschliesst, wobei der Abtropfabschnitt mehrere Abtropfspitzen aufweist, welche sich von der Dichtfläche in Richtung der Mittelachse weg erstrecken. Der Abtropfabschnitt bildet den Endbereich der Dichtmembran in Fliessrichtung der Flüssigkeit gesehen. Der Abtropfabschnitt ist optional. Alternativ kann die Dichtmembran gegen unten hin, also dort wo die Flüssigkeit in Fliessrichtung gesehen die Dichtmembran verlässt auch mit einer rechtwinklig zur Dichtfläche verlaufenden Kante versehen sein.

Vorzugsweise umfasst die Dichtmembran einen Lagerungsabschnitt, über welchen die Dichtmembran mit dem Lagerungselement in Verbindung steht, wobei der Lagerungsabschnitt in Abflussrichtung gesehen vor der Dichtfläche liegt. Der Lagerungsabschnitt schliesst sich also der Dichtfläche gegenüber dem ggf. vorhandenen Abtropfabschnitt an.

Der besagte Staubabschnitt schafft somit Stauraum für die Aufnahme der Flüssigkeit, welche eine Flüssigkeitssäule bildet, die auf den Dichtabschnitt einen Druck bereitstellt. Sobald die Flüssigkeitssäule genügend hoch ist und der Druck entsprechend angestiegen ist, löst sich die Dichtmembran mit der Dichtfläche von der Dichtwandung und die Dichtung zwischen Dichtmembran und Abflusselement wird aufgehoben. Es entsteht ein Spalt, vorzugsweise ein ringförmiger Spalt zwischen Dichtwandung und Dichtfläche, durch welchen die Flüssigkeit abfliessen kann.

Vorzugsweise weist das Abflusselement in Abflussrichtung gesehen vor der Dichtwandung einen Einlassbereich auf, wobei der Einlassbereich einen grösseren Durchmesser als die Dichtwandung aufweist. Über diesen Einlassbereich kann ebenfalls ein Stauraum geschaffen werden, in welchem sich eine Flüssigkeitssäule wie oben beschrieben aufbauen kann.

In einer besonders bevorzugten Weiterbildung liegt der Stauabschnitt der Dichtmembran im Einlassbereich des Abflusselementes. Hierdurch kann der besagte Stauraum optimal dimensioniert werden, so dass die Dichtwirkung bei optimaler Stauhöhe aufgehoben wird.

Besonders bevorzugt verrasten die Lagerstege das Lagerungselement im Abflusselement.

Vorzugsweise weist die Lagerplatte unterseitig einen Aufnahmeabschnitt für Aufnahme der Dichtmembran auf, wobei die Dichtmembran mit dem Lagerungsabschnitt am Aufnahmeabschnitt verbunden wird. Die Dichtmembran ist vorzugsweise auswechselbar an der Lagerplatte gelagert.

Besonders bevorzugt ist das Abflusselement ein Rohrstück, welches zusammen mit der Dichtmembran und dem Lagerungselement in eine Abflussvorrichtung einsetzbar ist. Die Dichtmembran wird im Innenraum des Rohrstückes gelagert und die Wandung des Rohrstückes, welche dem Innenraum zugewandt ist, stellt die Dichtwandung dar.

Die Dichtmembran ist besonders bevorzugt aus Silikon.

Die Dichtmembran weist, insbesondere im Bereich der Dichtfläche, vorzugsweise eine Wandstärke von 0.1 bis 0.4 mm auf.

Eine Abflussvorrichtung umfasst ein Abflussrohr und eine Geruchsverschlussvorrichtung nach obiger Beschreibung. Das Abflussrohr kann in einer ersten Variante das Abflusselement darstellen. Die Dichtmembran steht dann mit dem Abflussrohr in Kontakt. In einer zweiten Variante ist das Abflusselement in das Abflussrohr einsetzbar ausgebildet.

Besonders bevorzugt ist das Abflussrohr in Fliessrichtung gesehen nach der Geruchsverschlussvorrichtung verjüngt und/oder gekrümmt ausgebildet. Die Verjüngung oder die Krümmung sorgt für einen strömungstechnischen Widerstand, wobei die Flüssigkeit im Rohr zu Beginn des Abfliessens leicht gestaut wird, wodurch dann bei ansteigender Stauung die Flüssigkeit sich rasch entleert.

Eine Sanitärarmatur, insbesondere ein Urinal, umfasst eine Abflussvorrichtung nach obiger Beschreibung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittdarstellung durch eine Abflussvorrichtung mit einer erfindungsgemässen Geruchsverschlussvorrichtung nach einer Ausführungsform;
- Fig. 2: eine Seitenansicht der Geruchsverschlussvorrichtung nach Figur 1;
- Fig. 3: eine perspektivische Draufsicht der Geruchsverschlussvorrichtung nach Figuren 1 und 2;
- Fig. 4: eine Schnittdarstellung durch die Geruchsverschlussvorrichtung nach Figur 2 entlang der Schnittlinie IV-IV; und
- Fig. 5: eine Schnittdarstellung durch eine Dichtmembran der Geruchsverschlussvorrichtung nach einer der vorhergehenden Figuren.

### BESCHREIBUNG BEVORZUGTER AUSFÜHRUNGSFORMEN

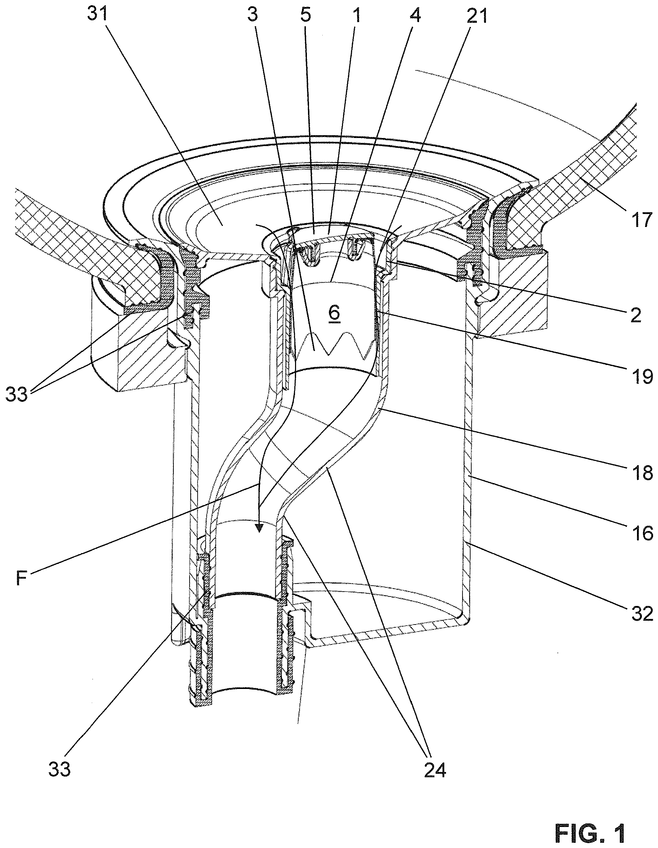

In der Figur 1 wird eine Schnittdarstellung einer Abflussvorrichtung 16 gezeigt. Die Abflussvorrichtung 16 ist hier in einer Sanitärvorrichtung 17 eingebaut. Die Sanitärvorrichtung kann dabei mit oder ohne Spülwasser betrieben werden. Die Sanitärvorrichtung 17 ist beispielsweise ein Urinal. Die Abflussvorrichtung 16 umfasst ein Abflussrohr 18 und eine Geruchsverschlussvorrichtung 1. Die Geruchsverschlussvorrichtung 1 ist hier im Abflussrohr 18 eingesetzt und verhindert das Aufsteigen von Gerüchen aus dem Abflussrohr 18 zur Sanitärvorrichtung 17 hin. Über die Geruchsverschlussvorrichtung 1 wird entlang der Abflussrichtung F Flüssigkeit, wie bspw. Urin, aus der Sanitärvorrichtung 17 in das Abflussrohr 18 zugeführt. Die Geruchsverschlussvorrichtung könnte aber auch in einem Wasserablauf, insbesondere in einem Waschbecken oder einer Dusche, angeordnet sein.

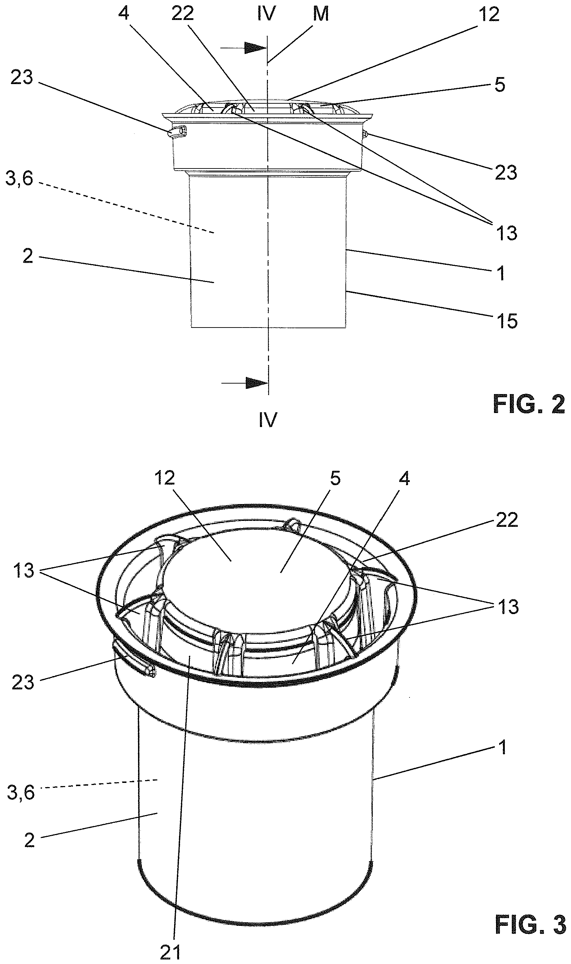

In der Figur 2 wird die Geruchsverschlussvorrichtung 1 nach der vorliegenden Erfindung gemäss einer bevorzugten Ausführungsform gezeigt. Die Figur 3 zeigt eine perspektivische Ansicht.

Die Geruchsverschlussvorrichtung 1 dient vorzugsweise dem Einsatz in spülwasserlosen Sanitärvorrichtungen, wie beispielsweise Urinalen. Unter spülwasserlos wird verstanden, dass kein Spülwasser für die Spülung eingesetzt wird. Die Spülung erfolgt durch die entsprechende Ausbildung der Komponenten der Sanitärvorrichtung, wobei die Flüssigkeit, insbesondere der Urin, durch die Schwerkraft die Sanitärvorrichtung 17 verlässt. Die Geruchsverschlussvorrichtung 1 kann aber auch mit Spülwasser betrieben werden.

Unter Bezugnahme auf die Figuren 2 bis 5 wird nun die Geruchsverschlussvorrichtung 1 detaillierter erläutert. Die Geruchsverschlussvorrichtung 1 umfasst ein Abflusselement 2 mit einer Dichtwandung 3, eine Dichtmembran 4, welche mit der Dichtwandung 3 dichtend in Kontakt ist und bei Anstehen von einer Flüssigkeit von der Dichtwandung 3 weggedrückt wird, wodurch ein Spalt 19 zwischen Dichtmembran 4 und Dichtwandung 3 gebildet wird, durch welche die Flüssigkeit abführbar ist, und ein Lagerungselement 5 zur Lagerung der Dichtmembran 4 bezüglich der Dichtwandung 3. Die Dichtmembran 4 weist eine Dichtfläche 6 auf, welche parallel zur Dichtwandung 3 verläuft.

Die Dichtmembran 4 nimmt im Wesentlichen zwei Stellungen, nämlich eine Verschlussstellung und eine Öffnungsstellung, ein. In der Verschlussstellung liegt die Dichtmembran 4 mit der Dichtfläche 6 an der Dichtwandung 3 des Abflusselementes 2 an. In der Öffnungsstellung wird die Dichtmembran 4 aufgrund des anstehenden Drucks durch die abzuführende Flüssigkeit verformt. Die Dichtfläche 6 entfernt sich dabei von der Dichtwandung 3, so dass der besagte Spalt 19 zwischen Dichtfläche 6 und Dichtwandung 3 gebildet wird, durch welchen die Flüssigkeit ablaufen kann.

In einer ersten Variante der bevorzugten Ausführungsform liegt die Dichtfläche 6 im Wesentlichen flächig an der Dichtwandung 3 an. Es besteht also ein flächiger Kontakt zwischen der Dichtfläche 6 und der Dichtwandung 3. Beim Kontakt zwischen Dichtfläche 6 und Dichtwandung 3 befindet sich die Dichtmembran 4 in der Verschlussstellung.

In einer zweiten Variante der bevorzugten Ausführungsform steht die Dichtfläche 6 derart beabstandet zur Dichtwandung 3, dass der zwischen der Dichtwandung 3 und der Dichtfläche 6 mindestens teilweise vorhandene Flüssigkeitsfilm eine Adhäsionskraft zwischen Dichtwandung 3 und Dichtfläche 6 bereitstellt. Hierdruch wird die Dichtfläche 6 der Dichtmembran 4 gegen die Dichtwandung 4 gezogen, wodurch sich die Dichtmembran 4 in der Verschlussstellung befindet.

Bei beiden Varianten der bevorzugten Ausführungsform wird eine Dichtwirkung zwischen der Dichtfläche 6 und der Dichtwandung 3 durch die Dichtmembran 4 bereitgestellt.

Die Dichtmembran 4 ist elastisch bzw. federnd ausgebildet und lässt sich bei anstehender Flüssigkeit von der Dichtwandung 3 weg drücken, derart dass der besagte Spalt gebildet wird. Die Dichtmembran 4 ist in der Öffnungsstellung. Bei Wegfallen der Flüssigkeit wird die Dichtmembran 4 mit der Dichtfläche 6 aufgrund deren elastischer bzw. federnden Eigenschaften gegen die Dichtwandung 3 bewegt, wodurch die besagte Dichtwirkung wieder bereitgestellt wird. Die Dichtmembran 4 ist in der Verschlussstellung. Allfällige Flüssigkeit, welche zwischen der Dichtfläche 6 und der Dichtwandung 3 vorhanden ist, unterstützt diesen Vorgang durch die Adhäsionskraft, welche durch die Flüssigkeit bereitgestellt wird. Mit anderen Worten kann auch gesagt werden, dass die Flüssigkeit aufgrund des Vorliegens eines dünnen Spaltes zwischen Dichtfläche 6 und Dichtwandung 3 über die Kapillarwirkung in diesen Spalt verbleibt.

Die Dichtwandung 3 und die Dichtfläche 6 sind vorzugsweise zylindrisch, insbesondere mit kreisförmigem Querschnitt, ausgebildet. Die Dichtwandung 6 ist vorzugsweise Teil eines Rohrstückes 15 und wird durch die Innenwandung des Rohrstückes 15 bereitgestellt. Die Dichtfläche 6 ist ebenfalls zylindrisch ausgebildet und ist als zylindrische Aussenfläche der Dichtmembran 4 bereitgestellt. Die zylindrische Aussenfläche der Dichtmembran 4 dichtet mit der zylindrischen Innenfläche des Rohrstückes 15.

Mit anderen Worten kann auch gesagt werden, dass die Dichtfläche 6 und die Dichtwandung 3 komplementär bzw. passend bzw. bezüglich deren Form im Bereich der Dichtung gleichartig zueinander ausgebildet sind und insbesondere im Wesentlichen den gleichen Durchmesser aufweisen. Die Form der Dichtfläche 6 verändert sich jedoch beim Durchfliessen der Flüssigkeit durch die Geruchsverschlussvorrichtung 1. In der Öffnungsstellung, in welcher die Flüssigkeit die Geruchsverschlussvorrichtung 1 durchfliesst, weist die Dichtfläche 6 eine andere Form auf wie die Dichtwandung 3. Es kann dann nicht mehr von eine komplementären Form gesprochen werden. Aufgrund der elastischen Eigenschaft der Dichtmembran 4 geht die Dichtfläche 6 aber dann bei wegfallen der Flüssigkeit wieder in die ursprüngliche Form zurück, sodass die Dichtfläche 6 und die Dichtwandung 3 wieder komplementär bzw. passend zueinander sind.

Die Dichtmembran 4 ist als Hohlzylinder ausgebildet, wobei die Dichtfläche 6 die Mantelfläche des Zylinders bereitstellt. Auf einer Stirnseite 25 ist die Dichtmembran mit einem Abschlussabschnitt 26 ausgebildet, welcher die Öffnung 27 im Hohlzylinder vollständig verschliesst. Der Abschlussabschnitt 26 kann entweder vollständig durch die Dichtmembran 4 oder durch mindestens teilweise durch andere Elemente, wie beispielsweise durch das Lagerungselement 5 bereitgestellt werden. Somit erstreckt sich die Dichtmembran alleine oder in Kombination mit dem Lagerungselement 5 vollständig über den Querschnitt der Dichtfläche.

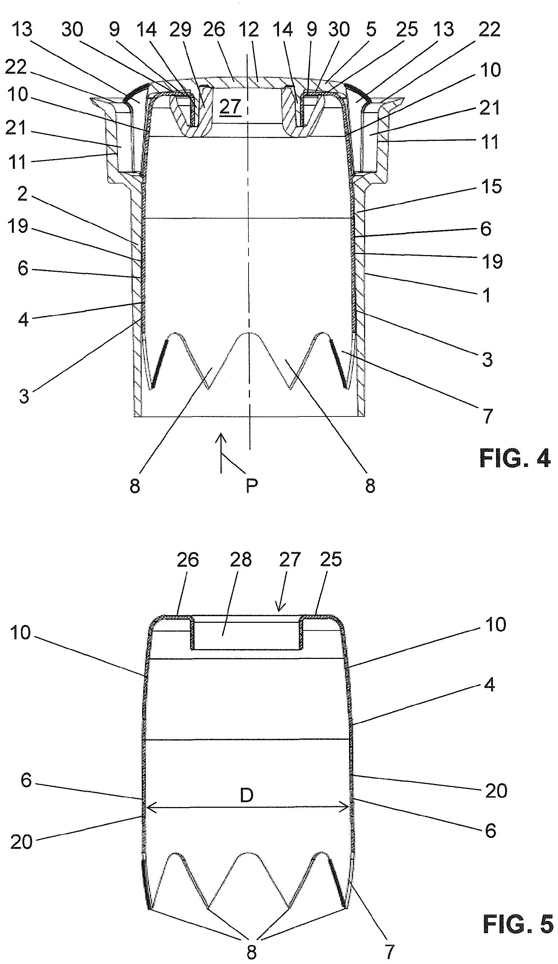

Die Dichtfläche 6 weist, wie in der Figur 5 gezeigt, einen Durchmesser D auf. Weiter erstreckt sich die Dichtfläche 6 umlaufend um eine Mittelachse M. In Richtung der Mittelachse M gesehen weist die Dichtfläche 6 eine Länge auf, welche grösser ist als 10% des besagten Durchmessers D, bevorzugter Weise grösser als 20% des Durchmessers D. Die Dichtfläche ist also eine eigentliche Fläche und nicht eine linienförmige Struktur. Die Dichtfläche 6 kann auch als Mantelfläche bezeichnet werden, welche hier zylinderförmig ausgebildet ist.

Die Oberfläche 20 der Dichtfläche 6 und/oder der Dichtwandung 3 ist in einer Variante flach bzw. eben bzw. plan ausgebildet. Mit anderen Worten gesagt weist die Oberfläche 20 der Dichtfläche 6 und/oder der Dichtwandung 3 keine Oberflächenstruktur, wie bspw. Rillen oder Erhebungen auf. In einer anderen Variante ist die Oberfläche 20 der Dichtfläche 6 und/oder der Dichtwandung 3 mindestens abschnittsweise mit einer Oberflächenstruktur versehen. Die Oberflächenstruktur kann bspw. die Gestalt von Rillen, von Noppen, von Rippen oder aber aufgeraut sein. Die Oberflächenstruktur hat gegenüber der flachen Ausbildung den Vorteil, dass die allfällige Bildung von Urinstein im Bereich der Dichtwandung 3 bzw. der Dichtfläche 6 bei geringer Benützung des Geruchsverschlussvorrichtung 1 ein Kleben verhindert werden kann. Zudem wird ein Ablösen bei anstehender Flüssigkeit erleichtert.

Die Dichtmembran 4 umfasst, wie in den Figuren 4 und 5 gezeigt, einen Abtropfabschnitt 7. Der Abtropfabschnitt 7 schliesst sich in Fliessrichtung F gesehen der Dichtfläche 6 an. In der vorliegenden Ausführungsform weist der Abtropfabschnitt 7 mehrere Abtropfspitzen 8 auf, welche sich von der Dichtfläche 6 in Richtung der Mittalachse M weg erstrecken. Die Abtropfspitzen 8 erstrecken sich also in Fliessrichtung F. Die Abtropfspitzen 8 haben den Vorteil, dass die Flüssigkeit gut von der Dichtmembran 4 im unteren Bereich abtropft. In einer alternativen Ausführungsform kann auch auf die Abtropfspitzen 8 verzichtet werden. Der Abtropfabschnitt 7 könnte dann als umlaufende Kante ausgebildet sein, welche rechtwinklig zur Mittelachse M verläuft.

Gegen oben hin, also gegenüber des allfälligen Abtropfabschnittes 7 weist die Dichtmembran 4 einen Lagerungsabschnitt 9 auf. Über den Lagerungsabschnitt 9 lässt sich die Dichtmembran 4 mit dem Lagerungselement 5 verbinden. Das Lagerungselement 5 lagert wiederum die Dichtmembran 4 im Abflusselement 2.

Der Lagerungsabschnitt 9 ist in Abflussrichtung F gesehen vor der Dichtfläche 6 angeordnet. Der Lagerungsabschnitt 9 stellt hier den besagten Abschlussabschnitt 26 bereit. Der Lagerungsabschnitt 9 weist in der vorliegenden Ausführungsform eine Öffnung 28 auf, über welche die Dichtmembran 4 am Lagerungselement 5 eingehängt wird. Somit stellt das Lagerungselement 5 ebenfalls einen Teil des besagten Abschlussabschnittes 26 bereit. Mit anderen Worten gesagt wird der eigentliche Geruchsverschluss in dieser Ausführungsform durch die Dichtmembran 4, die Dichtwandung 3 und das Lagerungselement 5 übernommen. In einer weiteren Variante wäre es auch denkbar, dass die Dichtmembran 4 im Abschlussabschnitt 26 ohne die Öffnung 28 ausgebildet ist, wobei dann ausschliesslich die Dichtmembran 4 für den Geruchsverschluss verantwortlich ist.

Die Dichtmembran 4 weist in Abflussrichtung F gesehen vor der Dichtfläche 6 einen konisch oder tonnenförmig verlaufenden Stauabschnitt 10 auf. Der Durchmesser des Stauabschnittes 10 verkleinert sich mit zunehmendem Abstand von der Dichtfläche 6. Durch den Stauabschnitt 10 wird ein Stauraum 21 geschaffen, durch welchen effizient eine Flüssigkeitssäule gebildet werden kann. Die Flüssigkeitssäule bewirkt einen Druck auf die Membran 4. Sobald die Flüssigkeitssäule eine gewisse Höhe erreicht hat, wird die Membran 4 vom Abflusselement 2 in ihre Öffnungsstellung weggedrückt. Das heisst, die Dichtfläche 6 der Dichtmembran 4 entfernt sich von der Dichtwandung 3, sodass ein Spalt 19 zwischen Dichtwandung 3 und Dichtfläche 6 entsteht, wodurch die Flüssigkeit ablaufen kann.

Das Abflusselement 2 weist in Abflussrichtung F gesehen vor der Dichtwandung 3 einen Einlassbereich 11 auf. Dieser Einlassbereich 11 weist einen grösseren Durchmesser als die Dichtwandung 3 auf. Über den Einlassbereich 11 kann ebenfalls ein Stauraum 21 für die Bereitstellung einer Flüssigkeitssäule geschaffen werden. Die Flüssigkeitssäule hat dabei den gleichen Effekt wie oben bereits beschrieben. Das heisst es wird ein Druck auf die Dichtmembran 4 bereitgestellt, sodass sich die zylindrische Dichtfläche 6 der Dichtmembran 4 von der Dichtwandung 3 des Abflusselementes 2 entfernt, wodurch der besagte Spalt 19 gebildet wird.

In einer besonders bevorzugten Ausführungsform, so wie diese bspw. in der Figur 4 dargestellt wird, liegt der Stauabschnitt 10 der Dichtmembran 4 im Einlassbereich 11 des Abflusselementes. Somit bilden der Stauabschnitt 10 und der Einlassbereich 11 den Stauraum 21. In diesem Stauraum 21 wird die Flüssigkeit gestaut, was den oben beschriebenen Effekt hat. Die Anordnung des Stauabschnittes 19 im Bereich des Einlassbereiches 11 hat den Vorteil, dass der Stauraum 21 besonders gut dimensioniert werden kann.

Das Lagerungselement 5 weist eine im Wesentlichen flächige Lagerplatte 12 auf. Von der Lagerplatte 12 erstrecken sich eine Mehrzahl von Lagerstegen 13. Über diese Lagerstege 13 ist die Lagerplatte 12 vorzugsweise zentrisch im Abflusselement 2 gelagert. In der vorliegenden Ausführungsform lagern die Lagerstege 13 in den Einlassbereich 11 des Abflusselementes 2 ein und werden dort aufgrund ihren mechanischen Dimensionierung entsprechend verrastet. Die Lagerstege 13 erstrecken sich also von der Lagerplatte 12 her gesehen in Richtung der Abflussrichtung F. Somit kommt die Lagerplatte 12 beabstandet zur Dichtwandung 3 und zur Dichtfläche 6 zu liegen. Durch die beabstandeten Lagerstege 13 entstehen Einlassbereiche 22 durch welche die Flüssigkeit der Dichtstelle zugeführt werden kann.

Unterseitig, also gegen die Dichtstelle hin, weist die Lagerplatte 12 einen Aufnahmeabschnitt 14 für die Aufnahme der Dichtmembran 4 auf. Die Dichtmembran 4 steht mit ihrem Lagerungsabschnitt 9 mit dem Aufnahmeabschnitt 14 in Verbindung. Besonders bevorzugt ist diese Verbindung derart, dass sie im Revisionsfall einfach aufgehoben werden kann, wobei dann die Dichtmembran 4 bei nachlassender Elastizität ausgewechselt werden kann. Hier wird die Dichtmembran 4 über eine Öffnung 27 am Aufnahmeabschnitt 14 gelagert und zudem mit einem Lagerring 29 am Aufnahmeabschnitt 14 gesichert. Der Lagerring 29 drückt die Dichtmembran 4 mit gegen die Lagerplatte 12, so dass eine Dichtstelle 30 bezüglich Gerüche geschaffen wird. Folglich wird in dieser Ausführung der Geruchsverschluss durch die Dichtmembran 4 und die Lagerplatte 12 bereitgestellt.

Der Stauabschnitt 10 der Dichtmembran 4 ist an den Lagerstegen 13 abgestützt, sowie dies in der Figur 4 gezeigt wird. Dies hat den Vorteil, dass ein allfälliger Gegendruck vom Abflusssystem, welcher durch den Pfeil P dargestellt ist, die Dichtmembran 4 nicht weiter aufdrücken kann, als dass diese an den Lagerstegen 13 abgestützt ist.
Das Abflusselement 2 hat in der Geruchsverschlussvorrichtung 1 gemäss der vorliegenden Ausführungsform die Gestalt eines Rohrstückes 15, welches zusammen mit der Dichtmembran 4 und dem Lagerungselement 5 in ein Abflussrohr 18 einer Abflussvorrichtung 16 einsetzbar ist. Das Rohrstück 15 kann aber auch durch das Abflussrohr 18 der Abflussvorrichtung 16 bereitgestellt werden. Das Rohrstück 15 umfasst hier die Dichtwandung 3, welche zum Innenraum des Rohrstückes 15 liegt. An dieser Innenwandung steht dann die Dichtmembran 4 mit der Dichtfläche 6 entsprechend an.
Die Dichtmembran 4 ist vorzugsweise aus Silikon und ist elastisch bzw. federnd ausgebildet, sodass diese von der Verschlussstellung in die Öffnungsstellung und wieder zurück ohne die Einwirkung von äusseren Kräften, abgesehen von der oben beschriebenen Adhäsionskraft durch die Kapillarwirkung bewegbar ist.
Die Dichtmembran 4 weist vorzugsweise eine Wandstärke von 0,1 bis 0,4 Millimeter auf. Die oben beschriebene Geruchsverschlussvorrichtung 1 ist Bestandteil einer Abflussvorrichtung 16, welche weiter ein Abflussrohr 18 umfasst. Das Abflussrohr 18 kann dabei das Abflusselement 2 bereitstellen, wobei dann die Dichtmembran 4 in direktem Kontakt mit dem Abflussrohr 18 ist. Alternativ kann das Abflusselement 2 in das Abflussrohr 18 einsetzbar ausgebildet sein. Das Abflusselement 2 ist in dieser Ausführungsform separat vom Abflussrohr 18 ausgebildet und ist in dieses entsprechend einsetzbar. Die Dichtmembran 4 ist also nicht mit dem Abflussrohr 18 in Kontakt, sondern mit dem Abflusselement 2. Vorzugsweise umfasst in dieser Ausführungsform das Abflusselement 2 auf seiner Aussenseite ein Verbindungsmittel 23, welches mit einem entsprechend am Abflussrohr 18 angeordneten Verbindungsmittel korrespondiert. Teilweise sei hier ein Teil eines Gewindes oder ein Bajonettverschluss genannt. Somit ist das Abflusselement 2 mit der Dichtmembran 4 über eine Drehbewegung in das Abflussrohr 18 einsetzbar.

Das Abflussrohr 18 ist vorzugsweise in Fliessrichtung gesehen nach der Geruchsverschlussvorrichtung 1, also nach der eigentlichen Dichtstelle zwischen Dichtwandung 3 und Dichtfläche 6 verjüngt und/oder gekrümmt ausgebildet. In der vorliegenden Ausführungsform ist das Abflussrohr 18 verjüngt und gekrümmt ausgebildet. Diese Verjüngung bzw. Krümmung hat den Vorteil, dass ein strömungstechnischer Widerstand bereitgestellt wird. Steht nun eine Flüssigkeit im Bereich des Stauraumes 21 an, so wird die Dichtmembran 4 bei Erreichen der entsprechenden Flüssigkeitssäule geöffnet. Durch den Spalt 19 strömt die Flüssigkeit zum verjüngten bzw. gekrümmten Abschnitt 24 des Abflussrohrs 18. Aufgrund des hydraulischen Widerstandes in diesem Abschnitt staut sich die Flüssigkeit leicht zurück, wodurch eine weitere Stauzone für die Flüssigkeit geschaffen wird. Sobald die Flüssigkeitssäule im Bereich des gekrümmten und/oder verjüngten Abschnittes 24 genügend hoch ist, steigt der Druck soweit an, dass die Flüssigkeit aus diesem Bereich ablaufen wird. Aufgrund der Schwerkraft der Flüssigkeit entsteht eine Sogwirkung, welche allfällige vor der Dichtfläche liegende Flüssigkeit, also Flüssigkeit im Bereich des Stauraumes 21 oder im Bereich der sanitären Vorrichtung 17, schneller nach unten in das Abflussrohr 18 zieht.

Nach oben hin weist das Abflussrohr 18 hier einen Trichter 31 auf, welcher in das Abflussrohr 18 mündet. Der Trichter ist dabei strömungstechnisch bündig mit dem Abflusselement 2 ausgebildet.

Das Abflussrohr 18 selbst ist hier einer topförmigen Aufnahme 32 gelagert. Die topfförmige Aufnahme 32 kann dann mit einer Sanitärvorrichtung 17 verbunden werden. Zwischen der topfförmigen Aufnahme 32 und dem Abflussrohr 18, hier dem Trichter 31, sowie zwischen der topfförmigen Aufnahme 32 und der Sanitärvorrichtung 17 sind geeignete Dichtungen 33 vorgesehen. Gleiches gilt für den Bereich, in welchem das Abflussrohr 18 aus der topfförmigen Aufnahme 32 austritt.

**BEZUGSZEICHENLISTE**

| | | | |
|---|---|---|---|
| 1 | Geruchsverschlussvorrichtung | 22 | Einlassbereich |
| 2 | Abflusselement | 23 | Verbindungsmittel |
| 3 | Dichtwandung | 24 | gekrümmter und/oder verjüngter Abschnitt |
| 4 | Dichtmembran | | |
| 5 | Lagerungselement | 25 | Stirnseite |
| 6 | Dichtfläche | 26 | Abschlussabschnitt |
| 7 | Abtropfabschnitt | 27 | Öffnung |
| 8 | Abtropfspitzen | 28 | Öffnung |
| 9 | Lagerungsabschnitt | 29 | Lagerring |
| 10 | Stauabschnitt | 30 | Dichtstelle |
| 11 | Einlassbereich | 31 | Trichter |
| 12 | Lagerplatte | 32 | topförmigen Aufnahme |
| 13 | Lagerstege | 33 | Dichtung |
| 14 | Aufnahmeabschnitt | | |
| 15 | Rohrstück | D | Durchmesser |
| 16 | Abflussvorrichtung | M | Mittelachse |
| 17 | Urinal | P | Pfeil |
| 18 | Abflussrohr | F | Abflussrichtung |
| 19 | Spalt | | |
| 20 | Oberfläche | | |
| 21 | Stauraum | | |

## Patentansprüche

1. Geruchsverschlussvorrichtung (1) für Sanitärvorrichtungen, wie beispielsweise Urinale, umfassend
ein Abflusselement (2) mit einer Dichtwandung (3),
eine Dichtmembran (4), welche mit der Dichtwandung (3) in einer Verschlussstellung dichtend in Kontakt ist und bei Anstehen von einer Flüssigkeit, wie Urin, von der Verschlussstellung in eine Öffnungsstellung von der Dichtwandung (3) weg gedrückt wird, wodurch ein Spalt (19) zwischen Dichtmembran (4) und Dichtwandung (3) gebildet wird, durch welchen die Flüssigkeit abführbar ist,
und ein Lagerungselement (5) zur Lagerung der Dichtmembran (4) bezüglich der Dichtwandung (3), wobei
die Dichtmembran (4) eine Dichtfläche (6) aufweist, welche im Wesentlichen parallel zur Dichtwandung (3) verläuft,
wobei die Dichtfläche (6) an der Dichtwandung (3) im Wesentlichen flächig anliegt oder
wobei die Dichtfläche (6) derart beabstandet zur Dichtwandung (3) ist, dass der zwischen der Dichtwandung (3) und der Dichtfläche (6) mindestens teilweise vorhandene Flüssigkeitsfilm eine Adhäsionskraft zwischen Dichtwandung (3) und Dichtfläche (6) bereitstellt, wobei die Dichtmembran (4) in Abflussrichtung (F) gesehen vor der Dichtfläche (6) einen konisch oder tonnenförmig verlaufenden Stauabschnitt (10) aufweist, wobei der Durchmesser des Stauabschnittes (10) sich mit zunehmendem Abstand von der Dichtfläche (6) verkleinert, und wobei das Lagerungselement (5) eine im Wesentlichen flächige Lagerplatte (12) aufweist,
**dadurch gekennzeichnet, dass** das Lagerungselement (5) sich von der Lagerplatte (12) erstreckende Lagerstege (13) aufweist, über welche Lagerstege (13) die Lagerplatte (12) im Abflusselement (2) gelagert ist und
dass der Stauabschnitt (10) der Dichtmembran (4) an den Lagerstegen (13) abgestützt ist.

2. Geruchsverschlussvorrichtung (1) nach Anspruch 1, **dadurch gekennzeichnet, dass** die Dichtwandung (3) und die Dichtfläche (6) zylindrisch ausgebildet sind und/oder dass die Dichtfläche (6) und die Dichtwandung (3) komplementär zueinander ausgebildet sind und insbesondere im Wesentlichen den gleichen Durchmesser (D) aufweisen.

3. Geruchsverschlussvorrichtung nach einem der vorhergehenden Ansprüche, **dadurch gekennzeichnet, dass** die Dichtmembran (4) als Hohlzylinder ausgebildet ist, dessen Mantelfläche die Dichtfläche (6) bereitstellt, wobei auf einer Stirnseite (25) der Hohlzylinder mit einem Abschlussabschnitt (26) ausgebildet ist, welcher den Hohlzylinder stirnseitig verschliesst, wobei der Abschlussabschnitt (26) vollständig durch die Dichtmembran (4) oder durch weitere Elemente, wie beispielsweise durch das Lagerungselement (5) bereitgestellt wird.

4. Geruchsverschlussvorrichtung nach einem der vorhergehenden Ansprüche, **dadurch gekennzeichnet, dass** die Dichtfläche (6) mit einem Durchmesser (D) um eine Mittelachse (M) umlaufend ausgebildet ist und in Richtung der Mittelachse (M) gesehen eine Länge (L) aufweist, welche grösser ist als 10% des besagten Durchmessers (D), bevorzugterweise grösser als 20% des besagten Durchmessers (D).

5. Geruchsverschlussvorrichtung nach einem der vorhergehenden Ansprüche, **dadurch gekennzeichnet, dass** die Oberfläche (20) der Dichtfläche (6) und/oder der Dichtwandung (3) flach ausgebildet sind, und/oder dass die Oberfläche (20) der Dichtfläche (6) und/oder der Dichtwandung (3) mindestens abschnittsweise mit einer Oberflächenstruktur, wie Rillen, Noppen, Rippen oder aufgeraute Oberfläche, versehen sind.

6. Geruchsverschlussvorrichtung nach einem der vorhergehenden Ansprüche, **dadurch gekennzeichnet, dass** die Dichtmembran (4) einen Abtropfabschnitt (7) umfasst, der sich der Dichtfläche (6) anschliesst, wobei der Abtropfabschnitt (7) vorzugsweise mehrere Abtropfspitzen (8) aufweist, welche sich von der Dichtfläche (6) in Richtung der Mittelachse (M) weg erstrecken.

7. Geruchsverschlussvorrichtung nach einem der vorhergehenden Ansprüche, **dadurch gekennzeichnet, dass** die Dichtmembran (4) einen Lagerungsabschnitt (9) aufweist, über welchen die Dichtmembran (4) mit dem Lagerungselement (5) in Verbindung steht, wobei der Lagerungsabschnitt (9) in Abflussrichtung (F) gesehen vor der Dichtfläche (6) liegt.

8. Geruchsverschlussvorrichtung nach einem der vorhergehenden Ansprüche, **dadurch gekennzeichnet, dass** in Abflussrichtung (F) gesehen vor der Dichtwandung (3) das Abflusselement (2) einen Einlassbereich (11) aufweist, wobei der Einlassbereich (11) einen grösseren Durchmesser als die Dichtwandung (3) aufweist.

9. Geruchsverschlussvorrichtung nach Anspruch 8 **dadurch gekennzeichnet, dass** der Stauabschnitt (10) im Einlassbereich (11) liegt.

10. Geruchsverschlussvorrichtung nach einem der vorhergehenden Ansprüche, **dadurch gekennzeichnet, dass** die Lagerstege (13) die Lagerplatte (12) zentrisch im Abflusselement (2) lagern.

11. Geruchsverschlussvorrichtung nach einem der vorhergehenden Ansprüche, **dadurch gekennzeichnet, dass** die Lagerplatte (12) unterseitig einen Aufnahmeabschnitt (14) zur Aufnahme der Dichtmembran (4) aufweist, wobei die Dichtmembran (4) mit dem Lagerungsabschnitt (9) am Aufnahmeabschnitt (14) verbunden wird.

12. Geruchsverschlussvorrichtung nach einem der vorhergehenden Ansprüche, **dadurch gekennzeichnet, dass** das Abflusselement (2) ein Rohrstück (15) ist, wobei das Rohrstück vorzugsweise zusammen mit der Dichtmembran (4) und dem Lagerungselement (5) in eine Abflussvorrichtung (16) einsetzbar ist.

13. Geruchsverschlussvorrichtung nach einem der vorhergehenden Ansprüche, **dadurch gekennzeichnet, dass** die Dichtmembran (4) aus Silikon ist und/oder dass die Dichtmembran (4) eine Wandstärke von 0.1 bis 0.4 mm aufweist.

14. Abflussvorrichtung (16) umfassend eine Geruchsverschlussvorrichtung (1) nach einem der vorhergehenden Ansprüche, wobei das das Abflusselement (2) ein Abflussrohr (18) ist oder wobei das Abflusselement (2) in ein Abflussrohr (18) der Abflussvorrichtung einsetzbar ausgebildet ist.

15. Abflussvorrichtung (16) nach Anspruch 14, **dadurch gekennzeichnet, dass** das Abflussrohr (17) in Fliessrichtung gesehen nach der Geruchsverschlussvorrichtung (1) verjüngt und/oder gekrümmt ausgebildet ist.

16. Sanitärvorrichtung, insbesondere ein Urinal, umfassend eine Abflussvorrichtung nach Anspruch 14 oder 15.

## Claims

1. An odour-trap device (1) for sanitary devices, such as for example urinals, comprising a discharge element (2) having a sealing wall (3),
a sealing membrane (4) which is in sealed contact with the sealing wall (3) in a closed position and, in the presence of a liquid such as urine, is forced away from the sealing wall (3) from the closed position into an open position, whereby a gap (19) is formed between the sealing membrane (4) and the sealing wall (3), the liquid being able to be discharged through said gap, and a bearing element (5) for bearing the sealing membrane (4) relative to the sealing wall (3),
wherein the sealing membrane (4) has a sealing surface (6) which extends substantially parallel to the sealing wall (3),
wherein the sealing surface (6) bears substantially flat against the sealing wall (3) or wherein the sealing surface (6) is spaced apart from the sealing wall (3) such that the film of liquid which is at least partially present between the sealing wall (3) and the sealing surface (6) provides an adhesive force between the sealing wall (3) and the sealing surface (6),
wherein the sealing membrane (4), viewed in the discharge direction (F), has a retention portion (10) extending in a conical or barrel-shaped manner upstream of the sealing surface (6), wherein the diameter of the retention portion (10) reduces as the distance from the sealing surface (6) increases,
and wherein the bearing element (5) has a substantially flat bearing plate (12), **characterized in that** the bearing element (5) has bearing webs (13) extending from the bearing plate (12), the bearing plate (12) being mounted in the discharge element (2) by said bearing webs (13) and
that the retention portion (10) of the sealing membrane (4) is supported on the bearing webs (13).

2. The odour-trap device (1) as claimed in claim 1, **characterized in that** the sealing wall (3) and the sealing surface (6) are configured to be cylindrical and/or the sealing surface (6) and the sealing wall (3) are configured to be complementary to one another and, in particular, to have substantially the same diameter (D).

3. The odour-trap device as claimed in one of the preceding claims, **characterized in that** the sealing membrane (4) is configured as a hollow cylinder, the lateral surface thereof providing the sealing surface (6), wherein on a front face (25) the hollow cylinder is configured with a terminal portion (26) which closes the hollow cylinder on the front face, wherein the terminal portion (26) is provided entirely by the sealing membrane (4) or by further elements, such as for example by the bearing element (5).

4. The odour-trap device as claimed in one of the preceding claims, **characterized in that** the sealing surface (6) is configured with a diameter (D) circulating around a central axis (M) and, viewed in the direction of the central axis (M), has a length (L) which is greater than 10% of said diameter (D), preferably greater than 20% of said diameter (D).

5. The odour-trap device as claimed in one of the preceding claims, **characterized in that** the surface (20) of the sealing surface (6) and/or the sealing wall (3) is configured to be flat and/or the surface (20) of the sealing surface (6) and/or the sealing wall (3) are provided at least partially with a surface structure, such as grooves, pimples, ribs or a roughened surface.

6. The odour-trap device as claimed in one of the preceding claims, **characterized in that** the sealing membrane (4) comprises a drainage portion (7) which adjoins the sealing surface (6), wherein the drainage portion (7) preferably comprises a plurality of drainage tips (8) which extend away from the sealing surface (6) in the direction of the central axis (M).

7. The odour-trap device as claimed in one of the preceding claims, **characterized in that** the sealing membrane (4) comprises a bearing portion (9), the sealing membrane (4) being connected thereby to the bearing element (5), wherein the bearing portion (9) is located upstream of the sealing surface (6), viewed in the discharge direction (F).

8. The odour-trap device as claimed in one of the preceding claims, **characterized in that** the discharge element (2), viewed in the discharge direction (F), has an inlet region (11) upstream of the sealing wall (3), wherein the inlet region (11) has a larger diameter than the sealing wall (3).

9. The odour-trap device as claimed in claim 8, **characterized in that** the retention portion (10) is located in the inlet region (11).

10. The odour-trap device as claimed in one of the preceding claims, **characterized in that** the bearing webs (13) mount the bearing plate (12) centrally in the discharge element (2).

11. The odour-trap device as claimed in claim 11, **characterized in that** the bearing plate (12) on the lower face has a receiving portion (14) for receiving the sealing membrane (4), wherein the sealing membrane (4) is connected to the bearing portion (9) on the receiving portion (14).

12. The odour-trap device as claimed in one of the preceding claims, **characterized in that** the discharge element (2) is a tubular piece (15), wherein the tubular piece, preferably together with the sealing membrane (4) and the bearing element (5), is able to be inserted into a discharge device (16).

13. The odour-trap device as claimed in one of the preceding claims, **characterized in that** the sealing membrane (4) is made of silicone and/or **in that** the sealing membrane (4) has a wall thickness of 0.1 to 0.4 mm.

14. A discharge device (16) comprising an odour-trap device (1) as claimed in one of the preceding claims, wherein the discharge element (2) is a discharge pipe (18) or wherein the discharge element (2) is configured to be able to be inserted into the discharge pipe (18).

15. The discharge device (16) as claimed in claim 14, **characterized in that** the discharge pipe (17) is configured to be tapered and/or curved downstream of the odour-trap device (1), viewed in the direction of flow.

16. A sanitary device, in particular a urinal, comprising a discharge device as claimed in claim 14 or 15.

## Revendications

1. Un dispositif de siphon (1) pour dispositifs sanitaires, comme par exemple des urinoirs, comprenant :
un élément d'écoulement (2) possédant une paroi d'étanchéité (3),
une membrane d'étanchéité (4) laquelle est en contact étanche avec la paroi d'étanchéité (3) dans une position de fermeture et laquelle, lors de l'arrivée d'un liquide tel que de l'urine, est repoussée de la paroi d'étanchéité (3) de la position de fermeture dans une position d'ouverture, ce qui permet de former entre la membrane d'étanchéité (4) et la paroi d'étanchéité (3) une fente (19) à travers laquelle le liquide peut être évacué,
et un élément de support (5) destiné à supporter la membrane d'étanchéité (4) par rapport à la paroi d'étanchéité (3),
où la membrane d'étanchéité (4) comporte une surface d'étanchéité (6), laquelle s'étend sensiblement parallèlement à la paroi d'étanchéité (3),
où la surface d'étanchéité (6) repose sensiblement à plat sur la paroi d'étanchéité (3) ou
où la surface d'étanchéité (6) est écartée de la paroi d'étanchéité (3) de telle sorte que le film de liquide au moins partiellement présent entre la paroi d'étanchéité (3) et la surface d'étanchéité (6) fournit une force d'adhésion entre la paroi d'étanchéité (3) et la surface d'étanchéité (6),
où, vu en direction d'écoulement (F), la membrane d'étanchéité (4) présente une section d'accumulation (10) s'étendant en forme de cône ou de tonneau avant la surface d'étanchéité (6), où le diamètre de la section d'accumulation (10) diminue en fonction d'une distance de la surface d'étanchéité (6) augmentant, et
où l'élément de support (5) présente une plaque de support (12) sensiblement plane,
**caractérisé en ce que** l'élément de support (5) présente des nervures de support (13) s'étendant de la plaque de support (12), à travers desquelles nervures de support (13) la plaque de support (12) est supportée dans l'élément d'écoulement (2), et que
la section d'accumulation (10) de la membrane d'étanchéité (4) s'appuie sur les nervures de support (13).

2. Le dispositif de siphon (1) selon la revendication 1, **caractérisé en ce que** la paroi d'étanchéité (3) et la surface d'étanchéité (6) sont formées de manière cylindrique et/ou que la surface d'étanchéité (6) ainsi que la paroi d'étanchéité (3) sont formées de manière complémentaire l'une par rapport à l'autre et en particulier sensiblement présentent un même diamètre (D).

3. Le dispositif de siphon selon une des revendications précédentes, **caractérisé en ce que** la membrane d'étanchéité (4) est formée en tant que cylindre creux, dont la surface enveloppe fournit la surface d'étanchéité (6), où sur un côté frontal (25), le cylindre creux est formé avec une section terminale (26), laquelle obture le cylindre creux du côté frontal, où la section terminale (26) est entièrement fournie par la membrane d'étanchéité (4) ou par des éléments supplémentaires, comme par exemple par l'élément de support (5).

4. Le dispositif de siphon selon une des revendications précédentes, **caractérisé en ce que** la surface d'étanchéité (6) est formée avec un diamètre (D) sertissant un axe central (M) et présente une longueur (L), vu en direction de l'axe central (M), qui est supérieure de 10% par rapport audit diamètre (D), préférablement supérieure de 20% par rapport audit diamètre (D).

5. Le dispositif de siphon selon une des revendications précédentes, **caractérisé en ce que** la surface (20) de la surface d'étanchéité (6) et/ou de la paroi d'étanchéité (3) est formée à plat, et/ou que la surface (20) de la surface d'étanchéité (6) et/ou de la paroi d'étanchéité (3) est pourvue au moins par segments d'une structure de surface, tel que des rainures, tétons, arêtes ou une surface rugueuse.

6. Le dispositif de siphon selon une des revendications précédentes, **caractérisé en ce que** la membrane d'étanchéité (4) présente une section d'égouttement (7), qui se raccorde à la surface d'étanchéité (6), où la section d'égouttement (7) présente préférablement plusieurs pointes d'égouttement (8), lesquelles s'étendent en s'éloignant en direction de l'axe central (M) à partir de la surface d'étanchéité (6).

7. Le dispositif de siphon selon une des revendications précédentes, **caractérisé en ce que** la membrane d'étanchéité (4) présente une section de support (9), à travers laquelle la membrane d'étanchéité (4) est en connexion avec l'élément de support (6), où la section de support (9), vu en direction d'écoulement (F), se situe avant la surface d'étanchéité (6).

8. Le dispositif de siphon selon une des revendications précédentes, **caractérisé en ce que**, avant la paroi d'étanchéité (3), vu en direction d'écoulement (F), l'élément d'écoulement (2) présente une zone d'entrée (11), où la zone d'entrée (11) présente un diamètre supérieur à la paroi d'étanchéité (3).

9. Le dispositif de siphon selon la revendication 8, **caractérisé en ce que** la section d'accumulation (10) se située dans la zone d'entrée (11).

10. Le dispositif de siphon selon une des revendications précédentes, **caractérisé en ce que** les nervures de support (13) supportent la plaque de support (12) de manière centrique dans l'élément d'écoulement (2).

11. Le dispositif de siphon selon une des revendications précédentes, **caractérisé en ce que** la plaque de support (12) présente sur son côté inférieur une section de logement (14) pour le logement de la membrane d'étanchéité (4), où la membrane d'étanchéité (4) est connectée avec la section de support (9) au niveau de la section de logement (14).

12. Le dispositif de siphon selon une des revendications précédentes, **caractérisé en ce que** l'élément d'écoulement (2) est une section de tuyau (15), où la section de tuyau peut être insérée préférablement ensemble avec la membrane d'étanchéité (4) et l'élément de support (5) dans un dispositif d'écoulement (16).

13. Le dispositif de siphon selon une des revendications précédentes, **caractérisé en ce que** la membrane d'étanchéité (4) est en silicone et/ou que la membrane d'étanchéité (4) présente une épaisseur de paroi de 0,1 à 0,4 mm.

14. Le dispositif d'écoulement (16) comprenant un dispositif de siphon (1) selon une des revendications précédentes, où l'élément d'écoulement (2) est un tuyau d'écoulement (18) et où l'élément d'écoulement (2) est formé de manière à pouvoir être inséré dans un tuyau d'écoulement (18) du dispositif d'écoulement.

15. Le dispositif d'écoulement (16) selon la revendication 14, **caractérisé en ce que** le tuyau d'écoulement (17), vu en direction d'écoulement, est formé de manière effilée et/ou courbée après le dispositif de siphon (1).

16. Un dispositif sanitaire, en particulier un urinoir, comprenant un dispositif d'écoulement selon la revendication 14 ou 15.
